# EUROPEAN PATENT APPLICATION

(11) **EP 2 257 113 A1**
(43) Date of publication of application: **01.12.2010**
(21) Application number: 10005472.5
(22) Date of filing: 26.05.2010
(51) Int. Cl.: H04W 72/04

(54) **Method and apparatus for handling carriers**

(30) Priority: 26.05.2009 US 180929 P
(71) Applicant: Innovative Sonic Corporation, Neihu District Taipei City (TW)
(72) Inventor: Ou, Meng-Hui, Peitou Taipei City (TW)
(74) Representative: Weber, Joachim

(57) **Abstract**

A method for handling carriers in a user equipment, named UE hereinafter, of a wireless communication system (10) is disclosed. The wireless communication system (10) supports Carrier Aggregation such that the UE is able to perform transmission and/or reception through multiple carriers. The method includes steps of configuring a plurality of carriers (402), and deactivating a carrier of the plurality of carriers according to a verification result (404).

## Description

The present invention relates to a method and apparatus for handling carriers in a wireless communication system according to the pre-characterizing clauses of claims 1 and 2.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, to keep an effective connection between a user equipment (UE) and a Node B after the connection is established, the UE triggers a timer T31 0 if the UE detects a radio problem, e.g. the UE detects consecutive "out-of-sync" indications from a physical layer (PHY). If the radio problem is not recovered before the timer T310 is expired, the UE determines a radio link failure (RLF) occurs, and triggers a connection re-establishment procedure, to re-establish a normal connection.

However, to meet future requirements of all kinds of communication services, the 3rd Generation Partnership Project (3GPP) has started to work out a next generation of the LTE system: the LTE Advanced (LTE-A) system. Carrier aggregation (CA), where two or more component carriers are aggregated, is introduced into the LTE-A system in order to support wider transmission bandwidths, e.g. up to 100MHz and for spectrum aggregation. Using CA, the network of the LTE-A system provides multiple component carriers instead of a single carrier for a UE, to establish multiple links for simultaneously receiving and/or transmitting on these component carriers.

At present, the characteristics of CA are quoted as below:
(1) Supporting CA for both contiguous and non-contiguous component carriers.
(2) It is possible to configure a UE to aggregate a different number of component carriers in the uplink (UL) and the downlink (DL), to obtain different bandwidths.
(3) From a UE perspective, there is one transport block and one hybrid-ARQ (HARQ) entity per scheduled component carrier.

As can be seen, a UE with CA configured can utilize multiple component carriers, and each of the component carriers may have a different coverage range or radio quality. Thus, a radio problem on a component carrier does not mean other component carriers are useless, i.e. other component carriers may work. In such a situation, if the UE can perform transmission/reception via normal component carriers, then the UE does not have to perform the connection re-establishment procedure regarding a radio problem on a certain component carrier. If the UE does not perform the connection re-establishment procedure, the UE must use other methods for handling radio problem of a component carrier. In general, the network can output a signaling to the UE, for indicating the UE to deactivate specific component carriers. However, when a certain component carrier has radio problems, the UE may not be able to receive the signaling for deactivating carriers promptly. In such a situation, the UE keeps monitoring a physical downlink control channel (PDCCH) on the carrier where the radio problem occurs, causing power waste.

Therefore, after CA is configured, if a component carrier has a radio problem, the UE may waste power, which must be improved.

This in mind, the present invention aims at providing a method and apparatus for handling carriers in a user equipment (UE) of a wireless communication system, to reduce waste of power, and enhance the system performance.

This is achieved by a method and apparatus for handling carriers in a user equipment (UE) of a wireless communication system according to the pre-characterizing clauses of claims 1 and 2. The dependent claims pertain to corresponding further developments and improvements.

As will be seen more clearly from the detailed description following below, the present invention discloses a method for handling carriers in a user equipment (UE) of a wireless communication system. The wireless communication system supports Carrier Aggregation (CA) such that the UE is able to perform transmission and/or reception through multiple carriers. The method includes steps of configuring a plurality of carriers, and deactivating a carrier of the plurality of carriers according to a verification result.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of a program of FIG.2.
FIG.4 is a flowchart of a process according to an embodiment of the present invention.

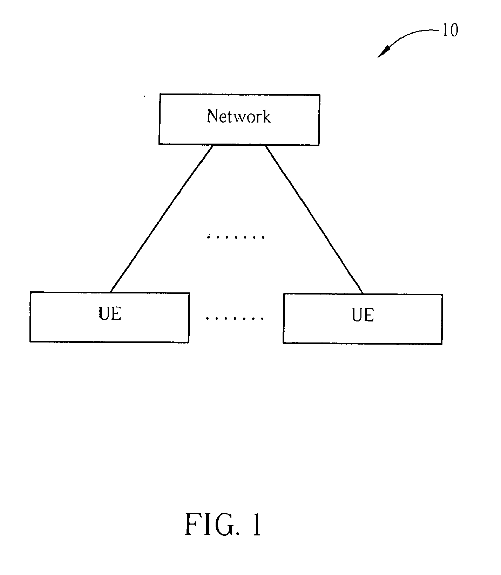

Please refer to FIG.1, which illustrates a schematic diagram of a wireless communication system 10. The wireless communication system 10 is preferably an LTE advanced (LTE-A) system, and is briefly composed of a network and a plurality of user equipments (UEs). In FIG.1, the network and the UEs are simply utilized for illustrating the structure of the wireless communication system 10. Practically, the network may comprise a plurality of base stations (Node Bs), radio network controllers and so on according to actual demands, and the UEs can be devices such as mobile phones, computer systems, etc.

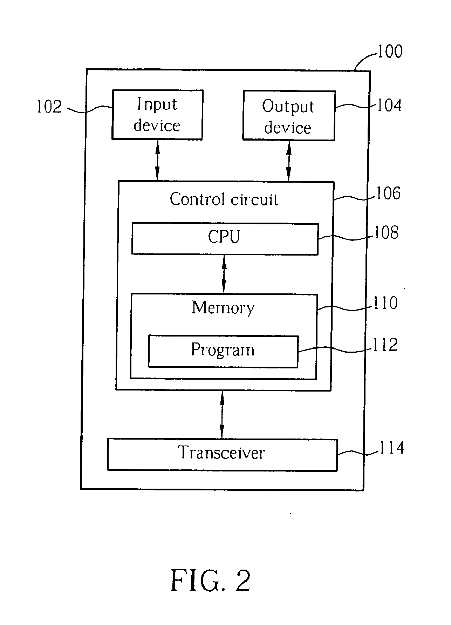

Please refer to FIG.2, which is a functional block diagram of a communication device 100 in a wireless communication system. The communication device 100 can be utilized for realizing the UEs in FIG .1. For the sake of brevity, FIG.2 only shows an input device 102, an output device 104, a control circuit 106, a central processing unit (CPU) 108, a memory 110, a program 112, and a transceiver 114 of the communication device 100. In the communication device 100, the control circuit 106 executes the program 112 in the memory 110 through the CPU 108, thereby controlling an operation of the communication device 100. The communication device 100 can receive signals input by a user through the input device 102, such as a keyboard, and can output images and sounds through the output device 104, such as a monitor or speakers. The transceiver 114 is used to receive and transmit wireless signals, deliver received signals to the control circuit 106, and output signals generated by the control circuit 106 wirelessly. From a perspective of a communication protocol framework, the transceiver 114 can be seen as a portion of Layer 1, and the control circuit 106 can be utilized to realize functions of Layer 2 and Layer 3.

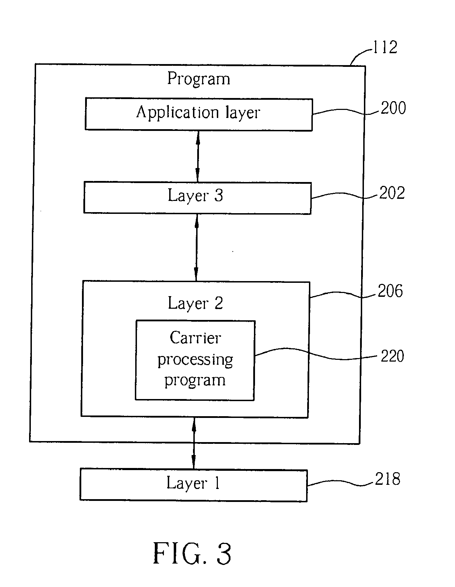

Please continue to refer to FIG.3. FIG.3 is a diagram of the program 112 shown in FIG.2. The program 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In LTE-A system, the Layer 1 218 and the Layer 2 206 may support a Carrier Aggregation (CA) technology, which enables the UE to perform transmission and/or reception through multiple carriers. In such a situation, the embodiment of the present invention provides a carrier processing program 220 for appropriately handling carriers, so as to avoid power waste, and thus, enhance the system performance.

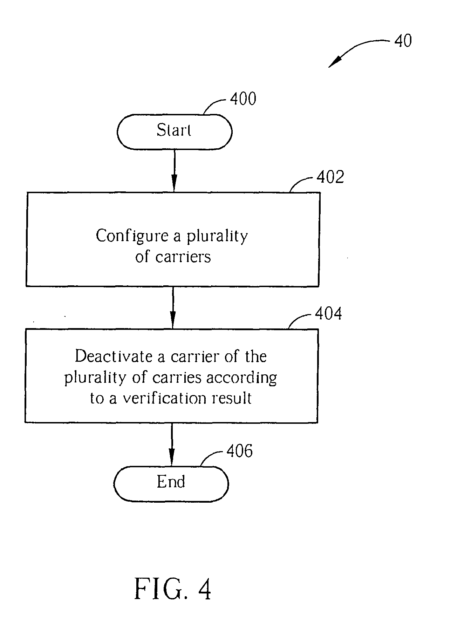

Please refer to FIG.4, which illustrates a schematic diagram of a process 40. The process 40 is utilized for handling carriers in a UE of the wireless communication system 10, and can be compiled into the carrier processing program 220. The process 40 includes the following steps:
Step 400: Start.
Step 402: Configure a plurality of carriers.
Step 404: Deactivate a carrier of the plurality of carriers according to a verification result.
Step 406: End.

According to the process 40, after CA is applied, the UE can deactivate specific carrier according to the inner verification result. In other words, in the embodiment of the present invention, the UE does not need to receive signaling from the network, but can autonomously deactivate carriers. As a result, if a carrier has a radio problem, according to the embodiment of the present invention, the UE can deactivate the carrier autonomously.

Preferably, the carrier that the UE can deactivate autonomously in step 404 belongs to carriers other than a primary carrier, i.e. secondary carriers. In addition, the verification result can be a time-count result of a timer. For example, when a secondary carrier has a radio problem, the UE can start a corresponding timer, and autonomously deactivate the secondary carrier upon expiry of the timer, i.e. the time-count result of the timer reaches or is greater than a predefined duration. As a result, even if the UE does not receive a signaling for deactivating the secondary carrier, since the UE has autonomously deactivated the secondary carrier, the UE does not monitor PDCCH on the carrier, such that power waste can be avoided. As to the network, the network can disable the signaling for deactivating carriers, and determine the UE has autonomously deactivated the secondary carrier after a predefined duration from the occurrence of the radio problem. Noticeable, the idea of the present invention is that the UE can autonomously deactivate carriers without signaling of the network. Thus, the aforementioned description about the network is to give an example.

In the embodiment of the present invention, after CA is applied, if a carrier has a radio problem, the UE can autonomously deactivate the carrier, so as to prevent unnecessary power consumption, and enhance the system performance.

In summary, when CA is applied, the UE can autonomously deactivate carriers, so as to prevent the issue caused by a radio problem on a certain carrier, and enhance the system performance

## Claims

1. A method for handling carriers in a user equipment, named UE hereinafter, of a wireless communication system(10), the wireless communication system(10) supporting Carrier Aggregation such that the UE is able to perform transmission and/or reception through multiple carriers, the method comprising:
configuring a plurality of carriers (402);
**characterized by** deactivating a carrier of the plurality of carriers according to a verification result (404).

2. A communication device (100) for handling carriers in a user equipment, named UE hereinafter, of a wireless communication system (10), the wireless communication system (10) supporting Carrier Aggregation such that the UE is able to perform transmission and/or reception through multiple carriers, the communication device (100) comprising:
a processor (108) for executing a program code (112); and
a storage device (110), coupled to the processor (108), for storing the program code (112), wherein the program code (112) comprises:
configuring a plurality of carriers (402);
**characterized by** deactivating a carrier of the plurality of carriers according to a verification result (404).

3. The method of claim 1 or the communication device (100) of claim 2, **characterized in that** the verification result is a time-count result of a timer corresponding to the carrier.

4. The method or the communication device (100) of claim 3, **characterized in that**, wherein deactivating the carrier of the plurality of carriers according to the verification result is deactivating the carrier when the time-count result of the timer is greater than a predefined duration.

5. The method of claim 1 or the communication device (100) of claim 2, **characterized in that** the carrier is a carrier other than a primary carrier.

6. The method of claim 1 or the communication device (100) of claim 2, **characterized in that** the carrier is a secondary carrier.

7. The method of claim 1 or the communication device (100) of claim 2, **characterized in that** the wireless communication system is a Long Term Evolution Advanced (LTE-A) system.
